# EUROPEAN PATENT APPLICATION

(11) **EP 4 672 482 A1**
(43) Date of publication of application: **31.12.2025**
(21) Application number: 24864059.1
(22) Date of filing: 22.04.2024
(51) Int. Cl.: H01M 50/533, H01M 50/593, H01M 10/0525, H01M 10/04, H01M 50/204, H01M 50/249

(54) **BATTERY CELL, BATTERY, AND ELECTRIC DEVICE**

(30) Priority: 12.09.2023 CN 202311170670
(71) Applicant: Contemporary Amperex Technology Co., Limited, Ningde, Fujian 352100 (CN)
(72) Inventor: SHI, Chongfu, Ningde, Fujian 352100 (CN); YANG, Chenlin, Ningde, Fujian 352100 (CN); ZHAO, Qian, Ningde, Fujian 352100 (CN); CAO, Junqi, Ningde, Fujian 352100 (CN)
(74) Representative: Lorenz Seidler Gossel Part. mbB
(86) International application number: PCT/CN2024/089148
(87) International publication number: WO 2025/055333

(57) **Abstract**

Embodiments of this application provide a cell, a battery, and an electric device. The cell includes: an electrode lead-out portion, configured to lead out electric energy of the cell; an electrode assembly, including a main body and a tab, the tab including a transition portion and a connecting portion, where the transition portion is connected between the connecting portion and the main body, and the connecting portion is connected to the electrode lead-out portion to form a connecting region; and an insulation component, where the insulation component includes a first insulator fixed to the main body and a third insulator fixed to the connecting portion, and the insulation component further includes a second insulator connected between the first insulator and the third insulator, where a part of the tab from a first joint to a second joint is not fixed to the insulation component. The cell, the battery, and the electric device according to the embodiments of this application are conducive to resolving the problem of tab tearing caused by a bonding force between the insulation component and the tab when the tab is unfolded, bent, or moved.

## Description

### CROSS-REFERENCE TO RELATED APPLICATIONS

This application claims priority to Chinese patent application 202311170670.3, filed on September 12, 2023, entitled "CELL, BATTERY, AND ELECTRIC DEVICE", which is incorporated herein by reference in its entirety.

### TECHNICAL FIELD

Embodiments of this application relate to the field of batteries, and in particular, to a cell, a battery and an electric device.

### BACKGROUND

Currently, a secondary battery mainly includes a can and an electrode assembly arranged in the can. Electrode terminals are arranged on the can, and tabs are arranged on the electrode assembly. The tabs are electrically connected to the electrode terminals. In the related art, an insulation component may be covered on the tabs, to protect the tabs. However, after being covered with the insulation component, the tabs may have the problem of being torn. Therefore, how to reduce the problem of tab tearing is a new issue.

### SUMMARY

In view of this, embodiments of this application provide a cell, a battery, and an electric device, which is conducive to resolving a problem of tab tearing caused by a bonding force between an insulation component and a tab when the tab is unfolded, bent, or moved.

According to a first aspect, a cell is provided, including: an electrode lead-out portion, configured to lead out electric energy of the cell; an electrode assembly, including a main body and a tab, the tab including a transition portion and a connecting portion, where the transition portion is connected between the connecting portion and the main body, and the connecting portion is connected to the electrode lead-out portion to form a connecting region; and an insulation component, where the insulation component includes a first insulator fixed to the main body and a third insulator fixed to the connecting portion, and the insulation component further includes a second insulator connected between the first insulator and the third insulator, where a part of the tab from a first joint to a second joint is not fixed to the insulation component, the first joint is a joint between the main body and the tab, and the second joint is an edge of the connecting region closest to the transition portion.

In this embodiment, the part of the tab from the first joint to the second joint is not fixed to the insulation component, so that the stress concentration problem generated from the first joint to the second joint can be alleviated during unfolding, bending, or moving of the tab, thereby helping reduce the problem of tab tearing during unfolding, bending, or moving of the tab.

In a possible implementation, the part of the tab from the first joint to the second joint is not fixed to the second insulator.

In this embodiment, the part of the tab from the first joint to the second joint is not fixed to the second insulator, so that the tab can release stress during unfolding, bending, or moving of the tab, thereby reducing the tension applied by the insulation component to the tab and lowering the risk of breakage of the tab.

In a possible implementation, the first insulator includes a first insulation layer and a first adhesive coating, and the third insulator includes a third insulation layer and a third adhesive coating, where the first insulation layer is bonded to the main body through the first adhesive coating, and the third insulation layer is bonded to the connecting portion through the third adhesive coating; and the second insulator includes a second insulation layer, where a surface of the second insulation layer facing the tab is exposed.

In this embodiment, by setting the surface of the second insulation layer facing the tab to be exposed, it can be implemented that the part of the tab from the first joint to the second joint is not fixed to the insulation component, so that during unfolding, bending, or moving of the tab, the tension applied by the insulation component to the tab is reduced, and the risk of breakage of the tab is lowered. In addition, the material used for the adhesive coating can be reduced, to lower costs.

In a possible implementation, the first insulator includes a first insulation layer and a first adhesive coating, the second insulator includes a second insulation layer and a second adhesive coating, and the third insulator includes a third insulation layer and a third adhesive coating; and the second insulator further includes a fourth insulation layer, where the fourth insulation layer is bonded to the second insulation layer through the second adhesive coating, and a surface of the fourth insulation layer facing the tab is exposed.

In this embodiment, by bonding the fourth insulation layer onto the second adhesive coating, and exposing the surface of the fourth insulation layer facing the tab, it can be implemented that the part of the tab from the first joint to the second joint is not fixed to the insulation component, so that during unfolding, bending, or moving of the tab, the tension applied by the insulation component to the tab is reduced, and the risk of breakage of the tab is lowered. In addition, the fourth insulation layer only needs to be bonded at a position corresponding to the tab from the first joint to the second joint, thereby reducing manufacturing complexity of the insulation component.

In a possible implementation, a dimension of the first insulator is the same as a dimension of the third insulator along an unfolding direction of the insulation component.

In this embodiment, the dimension of the first insulator is the same as the dimension of the third insulator along the unfolding direction of the insulation component, so that preparation of the insulation component can be simplified.

In a possible implementation, a dimension of the first insulator is different from a dimension of the third insulator along an unfolding direction of the insulation component.

In this embodiment, by setting the insulation component to be of an asymmetric structure, it is conducive to ensuring that the third insulator does not extend to a connecting region of an adjacent electrode assembly while ensuring the bonding force between the main body and the first insulator.

In a possible implementation, the dimension of the first insulator is greater than the dimension of the third insulator along the unfolding direction of the insulation component.

In this embodiment, an asymmetric insulation component is used, and the dimension of the first insulator is set to be greater than the dimension of the third insulator, to ensure dimensions of the insulators in the insulation component, which not only can ensure that the bonding force between the main body and the first insulator is large enough, but also can ensure that the third insulator does not extend to a connecting region of an adjacent electrode assembly.

In a possible implementation, a color of the first insulator is different from a color of the third insulator.

In this embodiment, the color of the first insulator and the color of the third insulator are set to be different, so that a charge coupled device (CCD) camera can identify a position of the insulation component by color. When the positions of the first insulator and the third insulator are reversed, the CCD camera alarms after detecting it, thereby achieving a fool-proof effect.

In a possible implementation, colors of the first adhesive coating and the third adhesive coating are different.

In this embodiment, by applying adhesive coatings of different colors, the color of the first insulator is different from the third insulator, so that it can be ensured that the first insulator and the third insulator are not reversed, thereby achieving a fool-proof effect.

In a possible implementation, the first adhesive coating is spaced apart from the first joint, and/or the third adhesive coating is spaced apart from the second joint.

In this embodiment, the first adhesive coating is spaced apart from the first joint, and/or the third adhesive coating is spaced apart from the second joint, so that during unfolding, bending, or moving, the tab is not pulled by the first adhesive coating at the first joint and is not pulled by the third adhesive coating at the second joint, thereby reducing a risk of breakage of the tab.

In a possible implementation, the first insulator, the second insulator, and the third insulator are integrally formed.

In this embodiment, the first insulator, the second insulator and the third insulator are integrally arranged, so that strength of the insulation component can be improved, and a peel-off risk can be reduced.

In a possible implementation, at least one of the first insulator, the second insulator, and the third insulator is formed individually.

In this embodiment, at least one of the first insulator, the second insulator, and the third insulator is formed individually. When a specific part of the insulation component fails, only the part of the insulation component needs to be replaced without replacing the entire insulation component, thereby reducing costs.

In a possible implementation, the cell includes a first electrode assembly and a second electrode assembly that are adjacent to each other, where the insulation component corresponding to the first electrode assembly and the insulation component corresponding to the second electrode assembly are individually integrally formed.

In this embodiment, the insulation component corresponding to the first electrode assembly and the insulation component corresponding to the second electrode assembly are individually integrally formed, which can enhance the overall strength of the insulation component corresponding to the first electrode assembly and the overall strength of the insulation component corresponding to the second electrode assembly. In addition, when an insulation component corresponding to one electrode assembly fails, only the corresponding insulation component needs to be replaced, thereby reducing costs.

In a possible implementation, the cell includes a first electrode assembly and a second electrode assembly that are adjacent to each other, where the third insulator corresponding to the first electrode assembly and the third insulator corresponding to the second electrode assembly are integrally formed.

In this embodiment, the third insulator included in the insulation component corresponding to the first electrode assembly and the third insulator included in the insulation component corresponding to the second electrode assembly are integrally formed, so that the insulation component corresponding to the first electrode assembly and the insulation component corresponding to the second electrode assembly can be combined together as much as possible, thereby improving a production capacity.

In a possible implementation, the first insulator and the second insulator that correspond to the first electrode assembly are integrally formed, and the first insulator and the second insulator that correspond to the second electrode assembly are integrally formed.

In this embodiment, the first insulator and the second insulator included in the insulation component corresponding to the first electrode assembly are integrally formed, the first insulator and the second insulator included in the insulation component corresponding to the second electrode assembly are integrally formed, and the third insulator included in the insulation component corresponding to the first electrode assembly and the third insulator included in the insulation component corresponding to the second electrode assembly are integrally formed, so that when a specific part of insulation fails, only the insulator of this part needs to be replaced, thereby reducing costs.

In a possible implementation, the first insulator corresponding to the first electrode assembly is individually formed, the first insulator corresponding to the second electrode assembly is individually formed, and the second insulator and the third insulator that correspond to the first electrode assembly are integrally formed with the second insulator and the third insulator that correspond to the second electrode assembly.

In this embodiment, the first insulator included in the insulation component corresponding to the first electrode assembly is individually formed, the second insulator and the third insulator included in the insulation component corresponding to the first electrode assembly, and the second insulator and the third insulator included in the insulation component corresponding to the second electrode assembly are integrally formed, and the first insulation component included in the insulation component corresponding to the second electrode assembly is individually formed, so that when a specific part of insulation fails, only the insulator of this part needs to be replaced, thereby reducing costs.

In a possible implementation, the insulation component corresponding to the first electrode assembly and the insulation component corresponding to the second electrode assembly are integrally formed.

In this embodiment, the insulation component corresponding to the first electrode assembly and the insulation component corresponding to the second electrode assembly are integrally formed, and only one insulation component needs to be covered between two adjacent electrode assemblies, which reduces a quantity of times of splicing and does not need fool-proofing, thereby improving a production capacity.

In a possible implementation, the electrode lead-out portion is welded to the connecting portion, where the connecting region is a weld mark region.

In this embodiment, the electrode lead-out portion is welded to the connecting portion, so that connection strength between the electrode lead-out portion and the tab can be improved.

In a possible implementation, the electrode lead-out portion includes an electrode terminal, where the electrode terminal is welded to the connecting portion; Alternatively, the electrode lead-out portion includes an electrode terminal and a connecting component, where the connecting portion is electrically connected to the electrode terminal by the connecting component, and the connecting portion is welded to the connecting component.

In this embodiment, the electrode terminal is directly welded to the connecting portion instead of being connected by a connecting component, so that costs can be reduced while improving the space utilization of the cell. However, the connecting portion is connected to the electrode terminal by the connecting component, thereby facilitating connection between the tab and the electrode terminal.

In a possible implementation, the electrode lead-out portion is arranged on a first wall of the cell, the transition portion is connected between a first end surface of the main body and the connecting portion, and the first end surface is arranged opposite to the first wall.

In this embodiment, the transition portion is bent relative to the first end surface of the main body, so that space occupied by the tab can be greatly saved.

According to a second aspect, a battery is provided, including the cell according to the first aspect.

According to a third aspect, an electric device is provided, including the battery according to the second aspect, where the battery is configured to provide electric energy to the electric device.

### BRIEF DESCRIPTION OF THE DRAWINGS

To describe the technical solutions in embodiments of this application more clearly, the following briefly describes the accompanying drawings required for the embodiments of this application. Apparently, the accompanying drawings in the following description show merely some embodiments of this application, and a person of ordinary skill in the art may still derive other accompanying drawings from the accompanying drawings without creative efforts.
FIG. 1 is a schematic structural diagram of a vehicle according to an embodiment of this application;
FIG. 2 is a schematic structural diagram of a battery according to an embodiment of this application;
FIG. 3 is a schematic exploded view of a cell according to an embodiment of this application;
FIG. 4 is a sectional view of a part of the cell in FIG. 3 when a tab is in an unfolded state;
FIG. 5 is a schematic exploded view of a cell according to another embodiment of this application;
FIG. 6 is a schematic cross-sectional view of an insulation component in an unfolded state according to an embodiment of this application;
FIG. 7 is a schematic cross-sectional view of another insulation component in an unfolded state according to an embodiment of this application;
FIG. 8 is a top view of an insulation component in an unfolded state according to an embodiment of this application;
FIG. 9 is a top view of another insulation component in an unfolded state according to an embodiment of this application;
FIG. 10 is a sectional view of the cell including two adjacent electrode assemblies shown in FIG. 4;
FIG. 11 is another sectional view of the cell including two adjacent electrode assemblies shown in FIG. 4;
FIG. 12 is a top view of an insulation component in FIG. 11 in an unfolded state;
FIG. 13 is a top view of another insulation component in FIG. 11 in an unfolded state; and
FIG. 14 is a top view of still another insulation component in FIG. 11 in an unfolded state.

Description of reference signs:
1-vehicle; 80-motor; 60-controller; 100-battery; 111-first box portion; 112-second box portion; 20-cell; 211-case; 212-cover plate; 22-electrode assembly; 23-connecting component; 24-insulation component; 214-electrode terminal; 214a-positive electrode terminal; 214b-negative electrode terminal; 221-tab; 221a-first tab; 221b-second tab; 222-main body; 2221-first end surface; 2222-first side surface; 2211-transition portion; 2212-connecting portion; 201-electrode lead-out portion; 202-connecting region; 203-first joint; 204-second joint; 241-first insulator; 242-second insulator; 243-third insulator; 2411-first insulation layer; 2412-first adhesive coating; 2421-second insulation layer; 2422-second adhesive coating; 2431-third insulation layer; 2432-third adhesive coating; 2423-fourth insulation layer; 22a-first electrode assembly; 221a-tab of the first electrode assembly; 222a-main body of the first electrode assembly; 2211a-transition portion of the first electrode assembly; 2212a-connecting portion of the first electrode assembly; 24a-insulation component corresponding to the first electrode assembly; 241a-first insulator corresponding to the first electrode assembly; 242a-second insulator corresponding to the first electrode assembly; 243a-third insulator corresponding to the first electrode assembly; 22b-second electrode assembly; 221b-tab of the second electrode assembly; 222b-main body of the second electrode assembly; 2211b-transition portion of the second electrode assembly; 2212b-connecting portion of the second electrode assembly; 24b-insulation component corresponding to the second electrode assembly; 241b-first insulator corresponding to the second electrode assembly; 242b-second insulator corresponding to the second electrode assembly; 243b-third insulator corresponding to the second electrode assembly; Y-unfolding direction of the insulation component.

### DETAILED DESCRIPTION

To make the objectives, technical solutions, and advantages of embodiments of this application clearer, the following clearly describes the technical solutions in the embodiments of this application with reference to the accompanying drawings in the embodiments of this application. Apparently, the described embodiments are some of the embodiments of this application rather than all the embodiments. All other embodiments obtained by a person of ordinary skill in the art based on the embodiments of this application without making creative efforts shall fall within the protection scope of this application.

Unless otherwise defined, all technical and scientific terms used herein have the same meanings as what is normally understood by a person skilled in the technical field of this application. Terms used in the specification of this application are merely intended to describe objectives of the specific embodiments, but are not intended to limit this application. The terms "include", "have" and any other variants in the specification, claims, and description of accompanying drawings of this application mean to cover the non-exclusive inclusion. The terms "first", "second", and the like in the description and claims of this application or the above drawings are used to distinguish different objects, rather than to describe a specific order or primary and secondary relationship.

The orientation terms appearing in the following description all are directions shown in the figures, and do not limit the specific structure in this application. In the description of this application, it should be further noted that, unless otherwise explicitly specified or defined, the terms such as "install", "connect", and "connection" should be understood in a broad sense. For example, the connection may be a fixed connection, a detachable connection, or an integral connection; a direct connection, or an indirect connection through an intermediate medium. For a person of ordinary skill in the art, specific meanings of the foregoing terms in this application may be construed according to specific circumstances.

In this application, the phase "embodiment" mentioned means that the specific features, structures, or characteristics described with reference to the embodiments can be included in at least one embodiment of this application. The phrase appearing at various positions in this specification may neither necessarily mean a same embodiment, nor mean an independent or optional embodiment exclusive from another embodiment. A person skilled in the art can clearly and implicitly understand that the embodiments described in this application can be combined with other embodiments.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates that the associated objects have an "or" relationship.

The term "a plurality of" in this application refers to more than two (including two), similarly, "a plurality of groups" refers to more than two groups (including two groups), and "a plurality of pieces" refers to more than two pieces (including two pieces).

In embodiments of this application, the cell may be a secondary battery. A secondary battery refers to a cell that can be recharged to activate active materials and continue to be used after the cells are discharged.

The cell may be a lithium ion battery, a sodium ion battery, a sodium lithium ion battery, a lithium metal battery, a sodium metal battery, a lithium sulfur battery, a magnesium ion battery, a nickel hydrogen battery, a nickel cadmium battery, a lead storage battery, or the like, which is not limited in the embodiments of this application.

The cell generally includes an electrode assembly. The electrode assembly includes a positive electrode, a negative electrode, and a separator. During charge and discharge of the cell, active ions (such as lithium ions) intercalate and de-intercalate back and forth between the positive electrode and the negative electrode. Arranged between the positive electrode and the negative electrode, the separator serves to prevent a short circuit between the positive electrode and the negative electrode and allow passage of the active ions.

In some embodiments, the positive electrode may be a positive electrode plate. The positive electrode plate can include a positive electrode current collector and a positive electrode active material arranged on at least one surface of the positive electrode current collector.

For example, the positive electrode current collector has two surfaces opposite to each other in a thickness direction of the positive electrode current collector, and the positive electrode active material is arranged on either or both of the two opposite surfaces of the positive electrode current collector.

For example, the positive electrode current collector may be a metal foil or a composite current collector. For example, as the metal foil, a silver-surface-processed aluminum or stainless steel, copper, aluminum, nickel, a carbon electrode, carbon, nickel, or titanium may be used. The composite current collector can include a polymer material substrate layer and a metal layer. The composite current collector can be formed by forming a metal material (aluminum, an aluminum alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, polyethylene, or the like).

For example, the positive electrode active material may include at least one of the following materials: a lithium-containing phosphate, a lithium transition metal oxide, and respective modified compounds thereof.

In some embodiments, the negative electrode may be a negative electrode plate. The negative electrode plate may include a negative electrode current collector.

For example, the negative electrode current collector may be a metal foil or a composite current collector. For example, as the metal foil, a silver-surface-processed aluminum or stainless steel, copper, aluminum, nickel, a carbon electrode, carbon, nickel, or titanium may be used. The composite current collector can include a polymer material substrate layer and a metal layer. The composite current collector can be formed by forming a metal material (copper, a copper alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, polyethylene, or the like).

For example, the negative electrode plate can include a negative electrode current collector and a negative electrode active material arranged on at least one surface of the negative electrode current collector.

For example, the negative electrode active material can be a negative electrode active material well known in the art for cells. For example, the negative electrode active material may include at least one of the following materials: artificial graphite, natural graphite, soft carbon, hard carbon, a silicon-based material, a tin-based material, lithium titanate, and the like.

In some embodiments, a material of the positive electrode current collector may be aluminum, and a material of the negative electrode current collector may be copper.

In some implementations, the electrode assembly further includes a separator, and the separator is arranged between the positive electrode and the negative electrode.

In some implementations, the separator is a separator film. The type of the separator is not particularly limited in this application, and any well-known separator of a porous structure having good chemical stability and mechanical stability may be used.

For example, a main material of the separator film may include at least one of glass fiber, nonwoven fabric, polyethylene, polypropylene, polyvinylidene fluoride, and ceramics.

In some implementations, the separator is a solid electrolyte. The solid-state electrolyte is provided between the positive electrode and the negative electrode, and also functions to transmit ions and isolate the positive electrode and the negative electrode.

In some implementations, the cell further includes an electrolyte, and the electrolyte transmits ions between the positive electrode and the negative electrode. The type of the electrolyte is not particularly limited in this application, and may be selected according to requirements. The electrolyte may be in a liquid, gel, or solid state.

In some implementations, the electrode assembly has a wound structure. The positive electrode plate and the negative electrode plate are wound into a wound structure.

In some implementations, the electrode assembly has a laminated structure.

For example, a plurality of positive electrode plates and a plurality of negative electrode plates can be respectively arranged, and the plurality of positive electrode plates and the plurality of negative electrode plates are arranged in an alternately stacked manner.

For example, a plurality of positive electrode plates can be arranged, the negative electrode plates are folded into a plurality of folded segments arranged in a stacked manner, and one positive electrode plate is sandwiched between adjacent folded segments.

For example, both the positive electrode plates and the negative electrode plates are folded to form a plurality of folded segments arranged in a stacked manner.

For example, a plurality of separators can be arranged, which are respectively arranged between any adjacent positive electrode plates or negative electrode plates.

For example, the separators can be consecutively arranged between any adjacent positive electrode plates or negative electrode plates by folding or winding.

In some implementations, the shape of the electrode assembly can be cylindrical, flat, polygonal prism-shaped, etc.

In some implementations, the electrode assembly is provided with tabs, and the tabs can conduct current from the electrode assembly. The tabs include a positive electrode tab and a negative electrode tab.

In some implementations, the cell may include a can. The can is configured to package components such as the electrode assembly and the electrolyte. The can may be a steel can, an aluminum can, a plastic can (such as a polypropylene can), a composite metal can (such as a copper-aluminum composite can), an aluminum-plastic film, or the like. The can includes a case and a cover plate.

For example, the cell may be a cylindrical cell, a prismatic cell, a pouch cell, or a cell in another shape. The prismatic cell includes a square-can cell, a blade-shaped cell, or a polygonal prismatic battery. The polygonal prismatic battery is, for example, a hexagonal prismatic battery. This is not specially limited in this application.

A battery mentioned in the embodiments of this application may be a single physical module including one or more cells to provide a higher voltage and a higher capacity. When there are a plurality of cells, the plurality of cells are connected in series, in parallel, or in series and parallel by a bus component.

In some embodiments, the battery may be a battery module. When there are a plurality of cells, the plurality of cells are arranged and fixedly formed into a battery module.

In some embodiments, the battery may be a battery pack. The battery pack includes a box and a cell, and the cell or battery module is accommodated in the box.

In some embodiments, the box can serve as a part of a chassis structure of a vehicle. For example, a part of the box may become at least a part of a floor of the vehicle, or a part of the box may become at least a part of a cross beam and a longitudinal beam of the vehicle.

Currently, a cell mainly includes a can and an electrode assembly arranged in the can. Electrode terminals are arranged on the can, and tabs are arranged on the electrode assembly. The tabs are electrically connected to the electrode terminals directly or indirectly to lead electric energy in the cell out of the cell.

To protect the tabs, in the related art, an insulation component may be covered on the tabs. However, if the insulation component is entirely bonded to the tab, there are stress points between the tab and a main body of the electrode assembly and between the tab and the electrode terminal or a connecting component. When the tab is unfolded, bent, or moved, the tab bonded to the insulation component may be torn.

In view of this, an embodiment of this application provides a cell. Setting a part of a tab from a first joint to a second joint to be not fixed to an insulation component is conducive to resolving the problem of tab tearing caused by a bonding force between the insulation component and the tab when the tab is unfolded, bent, or moved.

The technical solutions described in the embodiments of this application are all applicable to various devices using batteries, such as mobile phones, portable devices, notebook computers, electric bikes, electric toys, electric tools, electric vehicles, ships and spacecraft, and the like. For example, the spacecrafts include airplanes, rockets, space shuttles, spaceships, and the like.

It should be understood that the technical solutions described in various embodiments are not only limited to the devices described above, but also applicable to all devices using batteries, but for the sake of brevity, the following embodiments are described by using an electric vehicle as an example.

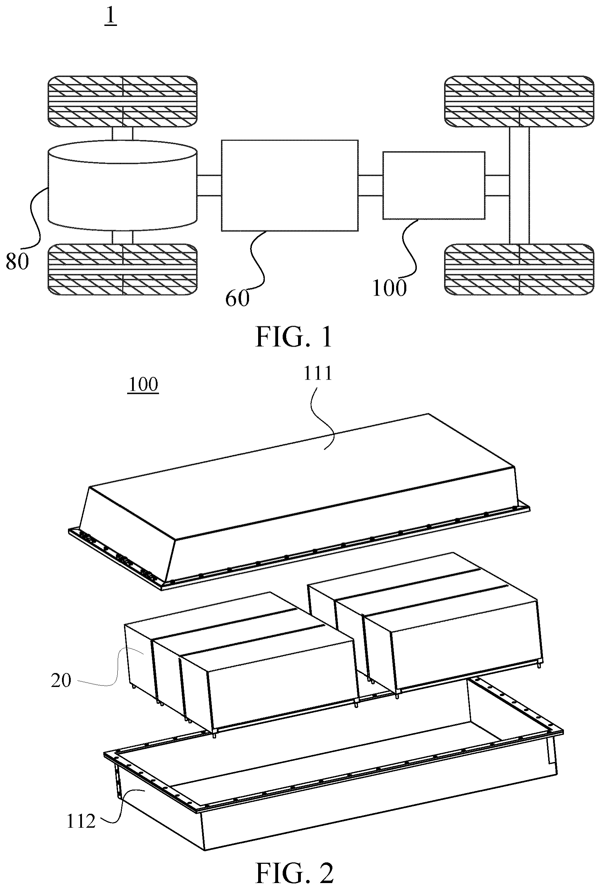

For example, as shown in FIG. 1, which is a schematic structural diagram of a vehicle 1 according to an embodiment of this application, the vehicle 1 may be a fuel-powered vehicle, a gas-powered vehicle, or a new energy vehicle. The new energy vehicle may be a pure electric vehicle, a hybrid electric vehicle, an extended-range vehicle, or the like. A motor 80, a controller 60, and a battery 100 may be provided inside the vehicle 1, and the controller 60 is configured to control the battery 100 to supply power to the motor 80. For example, the battery 100 may be arranged at the bottom, the front, or the rear of the vehicle 1. The battery 100 may be configured to supply power to the vehicle 1. For example, the battery 100 may serve as an operating power supply of the vehicle 1 to power a circuit system of the vehicle 1, for example, is configured to meet operating power demands of the vehicle 1 during startup, navigation and operation. In another embodiment of this application, the battery 100 can be used not only as the operating power supply of the vehicle 1, but also as a driving power supply of the vehicle 1, replacing or partially replacing fuel or natural gas to provide driving power for the vehicle 1.

For example, as shown in FIG. 2, which is a schematic structural diagram of a cell 100 according to an embodiment of this application. The battery 100 may include a plurality of cells 20. In addition to the cell 20, the battery 100 may further include a box, where an interior of the box is a hollow structure, and the plurality of cells 20 are accommodated in the box. As shown in FIG. 2, the box may include two portions, which are referred to as a first box portion 111 and a second box portion 112 respectively herein, and the first box portion 111 and the second box portion 112 are snap-fitted together. The shapes of the first box portion 111 and the second box portion 112 may depend on the shape of a combination of the plurality of cells 20. At least one of the first box portion 111 and the second box portion 112 has an opening. For example, as shown in FIG. 2, only one of the first box portion 111 and the second box portion 112 is a hollow cuboid provided with an opening, and the other one may be plate-shaped to cover the opening. Using an example in which the second box portion 112 is a hollow cuboid with only one surface being an open surface, and the first box portion 111 is plate-shaped, the first box portion 111 covers the opening of the second box portion 112 to form the box 11 having a closed chamber, where the chamber can be configured to accommodate the plurality of cells 20. The plurality of cells 20 are connected to each other in parallel or in series or in series and parallel before being placed in the box formed by snap-fitting the first box portion 111 and the second box portion 112.

For another example, different from FIG. 2, the first box portion 111 and the second box portion 112 may each be a hollow cuboid with only one surface being an open surface. The opening of the first box portion 111 and the opening of the second box portion 112 are arranged opposite to each other. In addition, the first box portion 111 and the second box portion 112 are snap-fitted to each other to form a box having a closed chamber. The plurality of cells 20 are connected to each other in parallel or in series or in series and parallel before being placed in the box formed by snap-fitting the first box portion 111 and the second box portion 112.

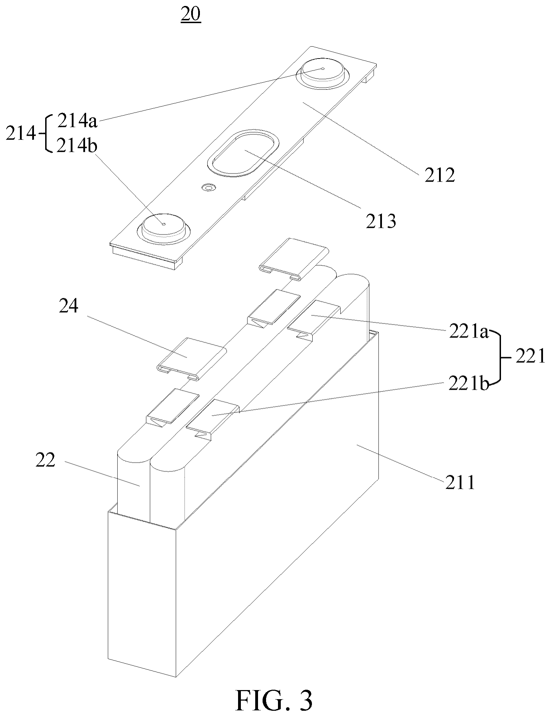

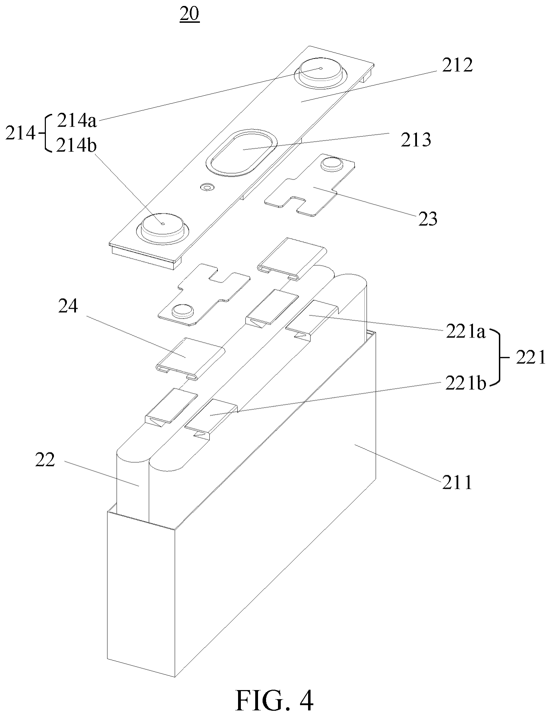

FIG. 3 is a schematic exploded view of a cell 20 according to an embodiment of this application. FIG. 4 is a schematic exploded view of a cell 20 according to another embodiment of this application.

As shown in FIG. 3 and FIG. 4, the cell 20 includes one or more electrode assemblies 22, a case 211, and a cover plate 212. A wall of the case 211 and the cover plate 212 are both referred to as a wall of the cell 20. The case 211 is shaped according to the shape of one or more electrode assemblies 22 after combination. For example, the case 211 may be a hollow cuboid or cube or cylinder, and one surface of the case 211 is provided with an opening, so that one or more electrode assemblies 22 can be placed in the case 211. For example, when the case 211 is a hollow cuboid or cube, one plane of the case 211 is an open surface, that is, the plane does not have a wall, so that the inside and outside of the case 211 are in communication with each other. When the case 211 is a hollow cylinder, an end surface of the case 211 is an open surface, that is, the end surface does not have a wall, so that the inside and outside of the case 211 are in communication with each other. The cover plate 212 covers the opening and is connected to the case 211 to form a closed chamber in which the electrode assembly 22 is placed. The case 211 is filled with an electrolyte such as an electrolytic solution.

The cell 20 further includes two electrode terminals 214. The cover plate 212 is generally in the shape of a flat plate, and the two electrode terminals 214 are fixed on a flat plate surface of the cover plate 212. The two electrode terminals 214 are a positive electrode terminal 214a and a negative electrode terminal 214b, respectively.

As shown in FIG. 3 and FIG. 4, each electrode assembly 22 has tabs 221, including a first tab 221a and a second tab 221b. The first tab 221a and the second tab 221b are opposite in polarity. When the first tab 221a is a positive electrode tab, the second tab 221b is a negative electrode tab. For example, as shown in FIG. 3, the first tabs 221a of one or more electrode assemblies 22 are connected to the positive electrode terminal 214a, and the second tabs 221b of one or more electrode assemblies 22 are connected to the negative electrode terminal 214b. In another example, as shown in FIG. 4, the first tabs 221a of one or more electrode assemblies 22 are connected to the positive electrode terminal 214a by one connecting component 23, and the second tabs 221b of one or more electrode assemblies 22 are connected to the negative electrode terminal 214b by another connecting component 23.

For example, a pressure relief mechanism 213 may also be arranged on a wall of the cell 20. The pressure relief mechanism 213 is configured to be actuated when an internal pressure or temperature of the cell 20 reaches a threshold to relieve the internal pressure or temperature.

Optionally, the pressure relief mechanism 213 may be arranged on the cover plate 212, or may be arranged on any wall of the case 211.

As shown in FIG. 3 and FIG. 4, the cell 20 further includes an insulation component 24. The insulation component 24 is arranged on a side of the tab 221 away from the cover plate 212, and is fixedly connected to the tab 221, to implement an insulation function.

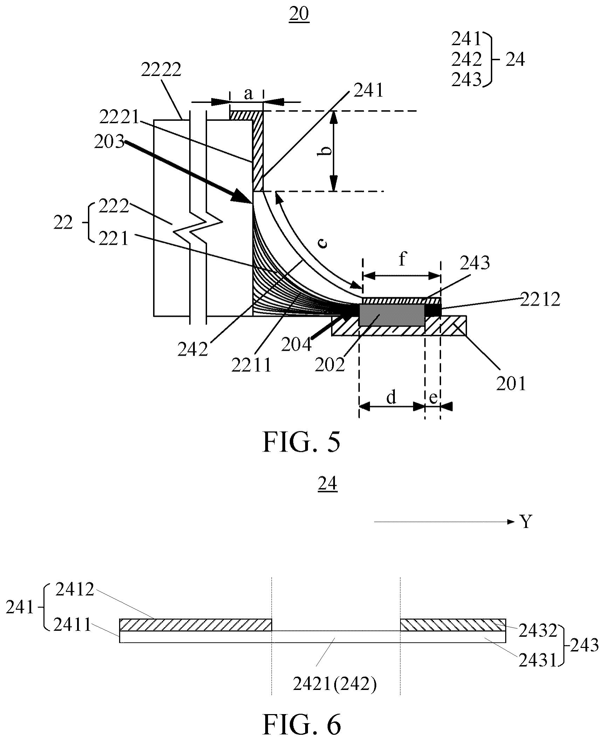

FIG. 5 is a sectional view of a cell 20 according to an embodiment of this application. In an embodiment, the cell 20 may be formed by loading the cell 20 into a case with a tab bent, as shown in FIG. 3 and FIG. 4. In another embodiment, the cell 20 may also be formed by directly loading the cell 20 into a case without bending a tab.

As shown in FIG. 5, the cell 20 includes: an electrode lead-out portion 201, configured to lead out electric energy of the cell 20; an electrode assembly 22, including a main body 222 and a tab 221, the tab 221 including a transition portion 2211 and a connecting portion 2212, where the transition portion 2211 is connected between the connecting portion 2212 and the main body 222, and the connecting portion 2212 is connected to the electrode lead-out portion 201 to form a connecting region 202; and an insulation component 24, where the insulation component 24 includes a first insulator 241 fixed to the main body 222 and a third insulator 243 fixed to the connecting portion 2212, and the insulation component 24 further includes a second insulator 242 connected between the first insulator 241 and the third insulator 243, where a part of the tab 221 from a first joint 203 to a second joint 204 is not fixed to the insulation component 24, the first joint 203 is a joint between the main body 222 and the tab 221, and the second joint 204 is an edge of the connecting region 202 closest to the transition portion 2211.

It should be understood that, the electrode lead-out portion 201 is configured to lead electric energy of the cell 20 out of the cell 20, and is connected to another cell in series or parallel. As shown in FIG. 3, the electrode lead-out portion 201 may include an electrode terminal 214, where the tab 221 is directly electrically connected to the electrode terminal 214. Alternatively, as shown in FIG. 4, the electrode lead-out portion 21 may include an electrode terminal 214 and a connecting component 23, where the tab 221 is electrically connected to the electrode terminal 214 by the connecting component 23.

In an example, the tab 221 may be bent relative to the main body 222 as shown in FIG. 3 and FIG. 4, that is, the electrode lead-out portion 201 is arranged opposite to the electrode assembly 22. In another example, the tab 221 may not be bent as shown in FIG. 5, that is, the electrode lead-out portion 201 and the electrode assembly 22 are arranged at an angle. For example, the electrode lead-out portion 201 is arranged perpendicularly to the electrode assembly 22.

In some embodiments, the tab 221 may be formed by extending from a first end surface 2221 of the main body 222.

For example, the tab 221 is formed by extending from a part of the first end surface 2221 of the main body 222, as shown in FIG. 5. In this example, along an extending direction of the insulation component 24, the first insulator 241 may include a segment a and a segment b shown in FIG. 5. The segment a is a dimension of a first side surface 2222 of the first insulator 241 fixed to the main body 222, and the segment b is a dimension of the first end surface 2221 of the first insulator 241 fixed to the main body 222. The second insulator 242 may include a segment c shown in FIG. 5. The segment c is a dimension in which a surface of the insulation component 24 facing the tab 221 is exposed. The third insulator 243 may include a segment f shown in FIG. 5. The segment f is a dimension in which the insulation component 24 is fixedly connected to the connecting portion 2212.

For another example, the tab 221 is formed by extending entirely from the first end surface 2221 of the main body 222. In this example, along the extending direction of the insulation component 24, the first insulator 241 may include only the segment a shown in FIG. 5. The third insulator 243 may further include the segment f shown in FIG. 5, and the second insulator 242 is connected between the first insulator 241 and the third insulator 243, and almost covers the entire first end surface 2221.

In some examples, an exposed part of the surface of the insulation component 24 facing the tab 221 may cover only the part of the tab 221 from the first joint 203 to the second joint 204. In this example, the segment b in FIG. 5 may extend downward to the first joint 203. The segment f may extend leftward to the second joint 204, that is, the segment f is approximately equal to a sum of the segment d and the segment e. The segment d is a dimension of the connecting region 202, and the segment e is a dimension by which the third insulator 243 extends beyond the connecting region 202.

In some other examples, the first insulator 241 is spaced apart from the first joint 203, and/or the third insulator 243 is spaced apart from the second joint 204. For example, the segment c shown in FIG. 5 is a distance between the first joint 203 and the second joint 204 plus 1 mm to 10 mm. For example, a length by which the segment c extends beyond the first joint 203 is 1 mm, and a length by which the segment c extends beyond the second joint 204 is 1 mm.

Generally, stress concentration is generated at a joint between the tab 221 and the main body 222 and a joint between the tab 221 and the electrode lead-out portion 201. That is, the first joint 203 is a stress point of a connection between the tab 221 and the main body 222, the second joint 204 is a stress point of a connection between the tab 221 and the electrode lead-out portion 201, and the transition portion 2211 may include a part between two stress points. The connecting portion 2212 refers to a part of the tab 221 for connecting to the electrode lead-out portion 201, and generally, may also be understood as a gathered portion of the tab 221. The connecting region 202 is a part of the connection portion 2212 connected to the electrode lead-out portion 201. For example, if the connecting portion 2212 is welded to the electrode lead-out portion 201, the connecting region 202 is a weld mark region between the connecting portion 2212 and the electrode lead-out portion 201.

As described above, the electrode assembly is formed by overlapping a plurality of positive electrode plates and a plurality of negative electrode plates. A tab is formed on each electrode plate. That is, the electrode assembly 22 in this embodiment of this application may include one or more tabs 221. When the electrode assembly 22 includes a plurality of tabs 221, there are a plurality of joints between the plurality of tabs 221 and the main body 222. When the tab 221 is in an unfolded state, the first joint 203 may be understood as a joint that is in the plurality of joints and that is closest to the first insulator 241, or the first joint 203 may be understood as a joint that is in the plurality of connections and that is closest to the first side surface 2222. However, when the tab 221 is in a bent state, the first joint 203 may be understood as a joint between the main body 222 and the tab 221 that is on an innermost side of the bending. The second joint 204 is an edge of the connecting region 202 closest to the transition portion 2211, and may include that: When the tab 221 is in an unfolded state, the second joint 204 may be a position of the connecting region 202 closest to the transition portion 2211. When the tab is in a bent state, the second joint 204 may be a part of the connecting region 202 closest to the bent region.

In this embodiment of this application, by arranging the second insulator 242 between the first insulator 241 and the third insulator 243, the first insulator 241 and the third insulator 243 are connected together, which can improve the connection strength between the first insulator 241 and the third insulator 243 on the electrode assembly 22, and reduce a peel-off risk. In addition, the part of the tab 221 from the first joint 203 to the second joint 204 is not fixed to the insulation component 24, so that the stress concentration problem generated from the first joint 203 to the second joint 204 can be alleviated during unfolding, bending, or moving of the tab 221, so that the tab 221 is not pulled by the insulation component 24 at the first joint 203 and is not pulled by the insulation component 24 at the second joint 225, thereby helping reduce the problem of tab tearing during unfolding or bending of the tab 221.

In some embodiments, the part of the tab 221 from the first joint 203 to the second joint 204 is not fixed to the second insulator 242.

As shown in FIG. 5, the second insulator 242 may cover the part of the tab 221 from the first joint 203 to the second joint 204. Therefore, that the part of the tab 221 from the first joint 203 to the second joint 204 is not fixed to the insulation component 24 may also be understood as that the part of the tab 221 from the first joint 203 to the second joint 204 is not fixed to the second insulator 242.

In this embodiment, the part of the tab 221 from the first joint 203 to the second joint 204 is not fixed to the second insulator 242, so that the tab 221 can release stress during unfolding, bending, or moving of the tab 221, thereby reducing the tension applied by the insulation component 24 to the tab 221 and lowering the risk of breakage of the tab 221.

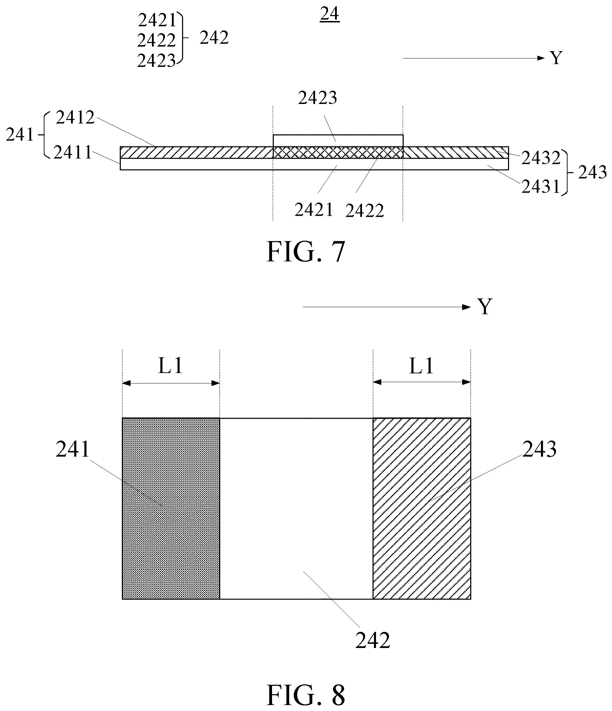

FIG. 6 is a schematic cross-sectional view of an insulation component 24 in an unfolded state according to an embodiment of this application. FIG. 7 is a schematic cross-sectional view of another insulation component 24 in an unfolded state according to an embodiment of this application.

As shown in FIG. 6, the first insulator 241 includes a first insulation layer 2411 and a first adhesive coating 2412, and the third insulator 243 includes a third insulation layer 2431 and a third adhesive coating 2432, where the first insulation layer 2411 is bonded to the main body 222 through the first adhesive coating 2412, and the third insulation layer 2431 is bonded to the connecting portion 2212 through the third adhesive coating 2432. The second insulator 242 includes a second insulation layer 2421. A surface of the second insulation layer 2421 facing the tab 221 is exposed.

It should be understood that, that the surface of the second insulation layer 2421 facing the tab 221 is exposed may be understood as that no adhesive coating is arranged on a side of the second insulation layer 2421 facing the tab 221.

In this embodiment, by setting the surface of the second insulation layer 2421 facing the tab 221 to be exposed, it can be implemented that the part of the tab 221 from the first joint 203 to the second joint 204 is not fixed to the second insulator 242, so that during unfolding, bending, or moving of the tab 221, the tension applied by the insulation component 24 to the tab 221 is reduced, and the risk of breakage of the tab 221 is lowered. In addition, the material used for the adhesive coating can be reduced, to lower costs.

As shown in FIG. 7, the first insulator 241 includes a first insulation layer 2411 and a first adhesive coating 2412, the second insulator 242 includes a second insulation layer 2421 and a second adhesive coating 2422, and the third insulator 243 includes a third insulation layer 2431 and a third adhesive coating 2422. The second insulator 242 further includes a fourth insulation layer 2423. The fourth insulation layer 2423 is bonded to the second insulation layer 2421 through the second adhesive coating 2422, and a surface of the fourth insulation layer 2423 facing the tab 221 is exposed.

It should be understood that, that the surface of the fourth insulation layer 2423 facing the tab 221 is exposed may be understood as that no adhesive coating is arranged on a side of the fourth insulation layer 2423 facing the tab 221.

In this embodiment, by bonding the fourth insulation layer 2423 to the second adhesive coating 2422 and setting the surface of the fourth insulation layer 2423 facing the tab 221 to be exposed, it can be implemented that the part of the tab 221 from the first joint 203 to the second joint 204 is not fixed to the second insulator 242, so that during unfolding, bending, or moving of the tab 221, the tension applied by the insulation component 24 to the tab 221 is reduced, and the risk of breakage of the tab 221 is lowered. In addition, the fourth insulation layer 2423 only needs to be bonded at a position corresponding to the tab 221 from the first joint 203 to the second joint 204, thereby reducing manufacturing complexity of the insulation component 24.

A material of the insulation layer in this embodiment of this application may include at least one of a PP material, a PE material, a PET material, and the like. A thickness of an insulation layer plus an adhesive coating may range from 0.001 mm to 0.5 mm. For example, a thickness of the first insulator 241, a thickness of the second insulator 232 excluding the fourth insulation layer 2423 in FIG. 7, and a thickness of the third insulator 243 all range from 0.001 mm to 0.5 mm.

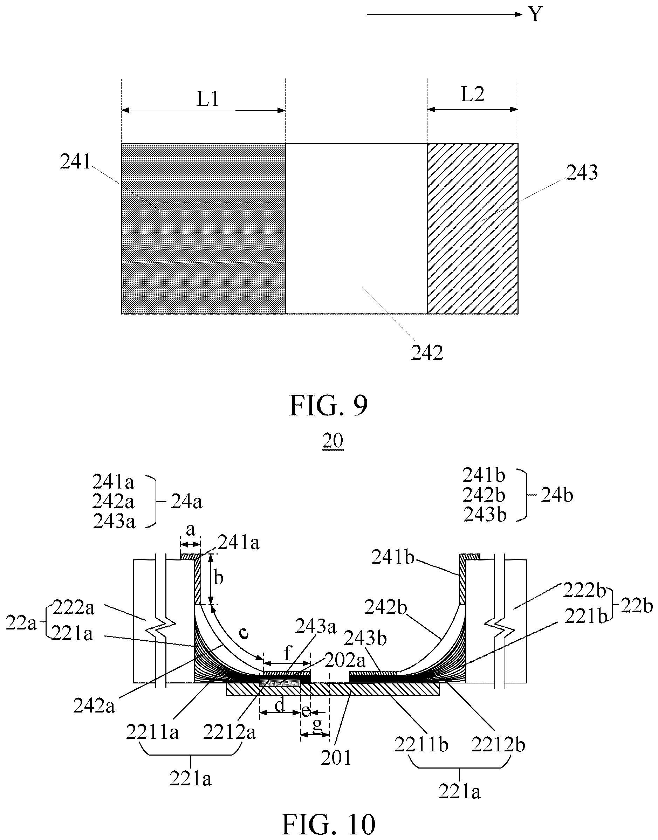

FIG. 8 is a top view of an insulation component 24 in an unfolded state according to an embodiment of this application. FIG. 9 is a top view of another insulation component 24 in an unfolded state according to an embodiment of this application.

In an embodiment, a dimension of the first insulator 241 is the same as a dimension of the third insulator 243 along an unfolding direction Y of the insulation component 24.

It may also be understood that the insulation component 24 has a symmetrical structure. For example, as shown in FIG. 8, a dimension of the first insulator 241 is L1, and a dimension of the third insulator 242 is also L1.

The unfolding direction Y of the insulation component 24 may be understood as an arrangement direction of the first insulator 241, the second insulator 242, and the third insulator 242 of the insulation component 24 in an unfolded state shown in FIG. 8.

It can be learned from the foregoing description that, to disperse the stress at the first joint 203, the first insulator 241 fixed to the main body 222 needs to have a particular dimension. Similarly, to disperse the stress at the second joint 204, the third insulator 243 fixed to the connecting portion 2212 also needs to have a particular dimension. In some embodiments, a dimension of the first insulator 241 and a dimension of the third insulator 243 may be set according to a dimension of an insulator required for a fixed connection to the main body 222 and a dimension of an insulator required for a fixed connection to the connecting portion 2212. For example, if a dimension of an insulator required for a fixed connection to the connecting portion 2212 is smaller, the first insulator 241 and the third insulator 243 may be set to a dimension of an insulator required for a fixed connection to the connecting portion 2212.

In this embodiment, the dimension of the first insulator 241 is the same as the dimension of the third insulator 243 along the unfolding direction Y of the insulation component 24, so that preparation of the insulation component 24 can be simplified.

The dimension of the first insulator 241 is different from the dimension of the third insulator 243 along the unfolding direction Y of the insulation component 24.

It may also be understood that the insulation component 24 has an asymmetrical structure. For example, as shown in FIG. 9, a dimension of the first insulator 241 is L1, and a dimension of the third insulator 242 is L2.

In this embodiment, by setting the insulation component 24 to be of an asymmetric structure, it is conducive to ensuring that the insulation component 24 does not extend to a connecting region of an adjacent electrode assembly while ensuring the bonding force between the main body 222 and the insulation component 24.

In some implementations, the dimension of the first insulator 241 is greater than the dimension of the third insulator 243 along the unfolding direction Y of the insulation component 24.

For example, as shown in FIG. 5, the dimension of the first insulator 241 is equal to a+b, and the dimension of the third insulator 242 is equal to c+d, where a+b is greater than d+e.

When the insulation component 24 has a symmetrical structure, the dimension of the first insulator 241 needs to be reduced, so that the insulation component 24 does not extend to a connecting region of an adjacent electrode assembly, but this may cause the bonding force between the insulation component 24 and the main body 222 to be small, resulting in a risk that the insulation component 24 is folded and has a poor appearance. However, in this embodiment, an asymmetric insulation component 24 is used, and the dimension of the first insulator 241 is set to be greater than the dimension of the third insulator 243, to ensure dimensions of the insulators, which not only can ensure that the bonding force between the main body 222 and the insulation component 24 is large enough, but also can ensure that the insulation component 24 does not extend to a connecting region of an adjacent electrode assembly.

In a possible implementation, a color of the first insulator 241 is different from a color of the third insulator 243. For example, the color of the first insulator 241 is yellow, and the color of the third insulator 243 is blue.

When the tab 221 is bonded to the insulation component 24, a bonding mechanism includes a CCD camera for detecting whether bonding of the insulation component 24 is completed. The CCD camera identifies, according to the color of the insulation component 24, whether bonding of the insulation component 24 is completed. When a same-color asymmetric insulation component 24 is used, because the dimensions of the first insulator 241 and the third insulator 243 are different, the CCD camera cannot identify whether the first insulator 241 and the third insulator 243 are bonded to wrong positions. Therefore, there is a problem that a fool-proof effect cannot be achieved. However, in this embodiment, the color of the first insulator 241 and the color of the third insulator 243 are set to be different, so that the CCD camera can identify a position of the insulation component 24 by color. When the positions of the first insulator 241 and the third insulator 243 are reversed, the CCD camera alarms after detecting it, thereby achieving a fool-proof effect.

In some other embodiments, a color of the first adhesive coating 2412 is different from a color of the third adhesive coating 2432. For example, the color of the first adhesive coating 2412 is yellow, and the color of the third adhesive coating 2432 is blue.

In this embodiment, by applying adhesive coatings of different colors, the color of the first insulator 241 is different from the third insulator 243, so that it can be ensured that the first insulator 241 and the third insulator 243 are not reversed, thereby achieving a fool-proof effect.

In some embodiments, the first adhesive coating 2412 is spaced apart from the first joint 203, and/or the third adhesive coating 2432 is spaced apart from the second joint 204.

In this embodiment of this application, in the unfolding direction Y of the insulation component 24, dimensions of the first adhesive coating 2412 and the first insulation layer 2411 may be the same or may be different. Similarly, in the unfolding direction Y of the insulation component 24, the dimension of the third adhesive coating 2432 may be the same as or different from the dimension of the third insulation layer 2431.

For example, when the dimension of the first adhesive coating 2412 is the same as the dimension of the first insulation layer 2411, the second insulator 242 may extend beyond the first joint 203. When the dimension of the third adhesive coating 2432 is the same as the dimension of the third insulation layer 2431, the second insulator 242 may extend beyond the second joint 204.

For another example, if the dimension of the first adhesive coating 2412 is smaller than the dimension of the first insulation layer 2411, the second insulator 242 may not extend beyond the first joint 203, but a side of the first adhesive coating 2412 close to the second insulator 242 is not flush with the first insulation layer 2411, and the first insulation layer 2411 extends beyond the first joint 203. If the dimension of the third adhesive coating 2432 is smaller than the dimension of the third insulation layer 2431, the second insulator 242 may not extend beyond the second joint 204, but a side of the third adhesive coating 2432 close to the second insulator 242 is not flush with the third insulation layer 2431, and the third insulation layer 2431 extends beyond the second joint 204. In this embodiment, on a side of the insulation component 24 away from the tab 221, the first insulation layer 2411 is fixedly bonded to the second insulation layer 2421, and the second insulation layer 2421 is fixedly bonded to the third insulation layer 2431.

In this embodiment, the first adhesive coating 2412 is spaced apart from the first joint 203, and/or the third adhesive coating 2432 is spaced apart from the second joint 204, so that during unfolding, bending, or moving, the tab 221 is not pulled by the first adhesive coating 2412 at the first joint 203 and is not pulled by the third adhesive coating 2432 at the second joint 204, thereby reducing a risk of breakage of the tab 221.

In an example, the first insulator 241, the second insulator 242, and the third insulator 243 are integrally formed.

For example, the first insulation layer 2411, the second insulation layer 2421, and the third insulation layer 2431 are integrally formed, and then the first adhesive coating 2412 and the third adhesive coating 2432 are respectively coated positions of the first insulation layer 2411 and the third insulation layer 2431.

In this embodiment, the first insulator 241, the second insulator 242, and the third insulator 243 are integrally arranged, so that strength of the insulation component 24 can be improved, and a peel-off risk can be reduced.

In another example, at least one of the first insulator 241, the second insulator 242, and the third insulator 243 is individually formed.

For example, the first insulator 241 is individually formed, and the second insulator 242 and the third insulator 243 are integrally formed. In another example, the first insulator 241 and the second insulator 242 are integrally formed, and the third insulator 243 is individually formed. In another example, the first insulator 241, the second insulator 242, and the third insulator 243 is respectively individually formed.

Optionally, if at least one of the first insulator 241, the second insulator 242, and the third insulator 243 is individually formed, when the insulation component 24 is fixed to the electrode assembly 22, a part including the second insulator 242 may be first mounted at a corresponding position, and then a part not including the second insulator 242 is mounted at a corresponding position. In addition, an edge of the part not including the second insulator 242 needs to press an edge of the part including the second insulator 242. For example, the first insulator 241, the second insulator 242, and the third insulator 243 are respectively individually formed. The second insulator 242 is first placed at a position corresponding to the part of the tab 221 from the first joint 203 to the second joint 204. Then, the first insulator 241 is fixed to the main body 222 connected to the transition portion 2211, and the third insulator 243 is fixed to the connecting portion 2212 connected to the transition portion 2211. An edge of the first insulator 241 presses an edge of the second insulator 242, so that the first insulator 241 and the second insulator 242 can be spliced. An edge of the third insulator 243 presses an edge of the second insulator 242, so that the third insulator 243 and the second insulator 242 can be spliced.

In this embodiment, at least one of the first insulator 241, the second insulator 242, and the third insulator 243 is formed individually. When a specific part of the insulation component 24 fails, only the part of the insulation component needs to be replaced without replacing the entire insulation component 24, thereby reducing costs.

The foregoing descriptions are provided for one electrode assembly 22 in the cell 20. With reference to FIG. 10 to FIG. 14, an example in which the cell 20 includes two adjacent electrode assemblies 22 is used below for description. When the cell 20 includes a plurality of electrode assemblies 22, insulation of the tab 221 of any two adjacent electrode assemblies 22 is applicable to the following embodiments.

First, two adjacent electrode assemblies 22 include a first electrode assembly 22a and a second electrode assembly 22b. The first electrode assembly 22a includes a main body 222a and a tab 221a. The tab 221a of the first electrode assembly 22a includes a transition portion 2211a and a connecting portion 2212a. The second electrode assembly 22b includes a main body 222b and a tab 221b. The tab 221b of the second electrode assembly 22b includes a transition portion 2211b and a connecting portion 2212b. An electrode lead-out portion corresponding to the first electrode assembly 22a and an electrode lead-out portion corresponding to the second electrode assembly 22b are arranged on a same wall of the cell 20. An insulation component 24a corresponding to the first electrode assembly 22a includes a first insulator 241a, a second insulator 242a, and a third insulator 243a, and an insulation component 24b corresponding to the second electrode assembly 22b includes a first insulator 241b, a second insulator 242b, and a third insulator 243b. Similar to FIG. 5, the first insulator 241a corresponding to the first electrode assembly 22a includes a segment a and a segment b, the second insulator 242a corresponding to the first electrode assembly 22a includes a segment c, the third insulator 243a corresponding to the first electrode assembly 22a includes a segment f, and a segment d is a dimension of a connecting region 202a of the first electrode assembly 22a. A segment e is a dimension by which the third insulator 243a corresponding to the first electrode assembly 22a exceeds beyond the connecting region 202a. The segment g is a distance from an edge of the connecting region 202a of the first electrode assembly 22a to a center line between the first electrode assembly 22a and the second electrode assembly 22b. For respective dimensions corresponding to the second electrode assembly 22b, reference may be made to the first electrode assembly 22a. For brevity, the dimensions are not shown in the figure.

It should be understood that the symmetric structure or asymmetric structure described above may be used for both the insulation component 24a corresponding to the first electrode assembly 22a and the insulation component 24b corresponding to the second electrode assembly 22b, the first insulator 241a and the third insulator 243a included in the insulation component 24a corresponding to the first electrode assembly 22a may be of the same color or different colors, and the first insulator 241b and the third insulator 243b included in the insulation component 24b corresponding to the second electrode assembly 22b may be of the same color or different colors. This is not limited in the embodiments of this application.

In an embodiment, as shown in FIG. 10, the cell 20 includes a first electrode assembly 22a and a second electrode assembly 22b that are adjacent to each other, where an insulation component 24a corresponding to the first electrode assembly 22a and an insulation component 24b corresponding to the second electrode assembly 22b are individually integrally formed.

Optionally, the insulation component 24a corresponding to the first electrode assembly 22a and the insulation component 24b corresponding to the second electrode assembly 22b are not spliced together. For example, a distance between the insulation component 24a corresponding to the first electrode assembly 22a and the center line between the first electrode assembly 22a and the second electrode assembly 22b ranges from 1 mm to 10 mm, and a distance between the insulation component 24b corresponding to the second electrode assembly 22b and the center line between the first electrode assembly 22a and the second electrode assembly 22b ranges from 1 mm to 10 mm. That is, as shown in FIG. 10, the segment e is the segment g minus 1 mm to 10 mm.

In other words, for the first electrode assembly 22a and the second electrode assembly 22b, only two insulation components may be needed. The two insulation components as respectively integrally formed and manufactured.

Further, the insulation component 24a corresponding to the first electrode assembly 22a and the insulation component 24b corresponding to the second electrode assembly 22b are spaced apart.

In this embodiment, the insulation component 24a corresponding to the first electrode assembly 22a and the insulation component 24b corresponding to the second electrode assembly 22b are individually integrally formed, which can enhance the overall strength of the insulation component 24a corresponding to the first electrode assembly 22a and the overall strength of the insulation component 24b corresponding to the second electrode assembly 22b. In addition, when an insulation component corresponding to one electrode assembly fails, only the corresponding insulation component needs to be replaced, thereby reducing costs.

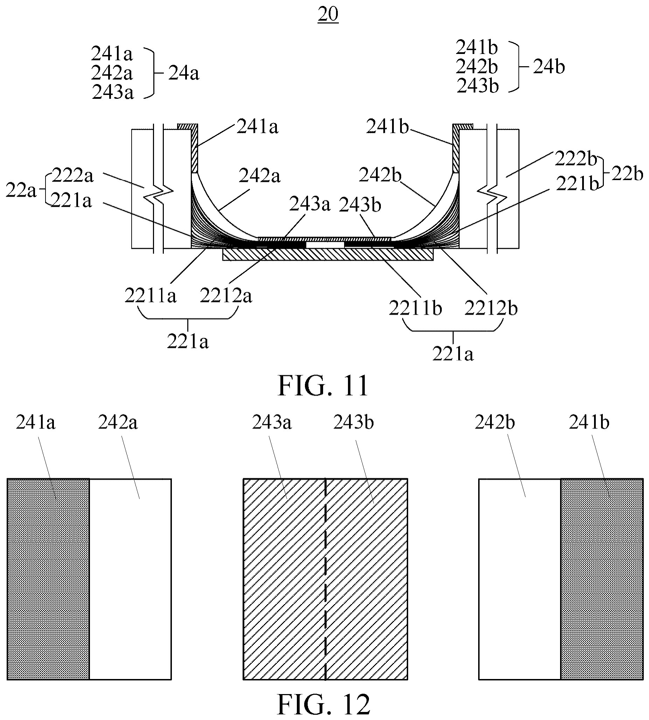

In another embodiment, as shown in FIG. 11, the cell 20 includes a first electrode assembly 22a and a second electrode assembly 22b that are adjacent to each other, where a third insulator 243a included in an insulation component 24a corresponding to the first electrode assembly 22a and a third insulator 243b included in an insulation component 24b corresponding to the second electrode assembly 22b are integrally formed.

In other words, the third insulator 243a included in the insulation component 24a corresponding to the first electrode assembly 22a and the third insulator 243b included in the insulation component 24b corresponding to the second electrode assembly 22b are integrally formed and manufactured.

In this embodiment, the third insulator 243a included in the insulation component 24a corresponding to the first electrode assembly 22a and the third insulator 243b included in the insulation component 24b corresponding to the second electrode assembly 22b are integrally formed, so that the insulation component 24a corresponding to the first electrode assembly 22a and the insulation component 24b corresponding to the second electrode assembly 22b can be combined together as much as possible, thereby improving a production capacity.

In another embodiment, as shown in FIG. 12, the first insulator 241a and the second insulator 242a included in the insulation component 24a corresponding to the first electrode assembly 22a are integrally formed, and the first insulator 241b and the second insulator 242b included in the insulation component 24b corresponding to the second electrode assembly 22b are integrally formed.

In this embodiment, the third insulator 243a included in the insulation component 24a corresponding to the first electrode assembly 22a and the third insulator 243b included in the insulation component 24b corresponding to the second electrode assembly 22b are integrally formed. For the first electrode assembly 22a and the second electrode assembly 22b, only three insulation components may be needed.

In this embodiment, the first insulator 241a and the second insulator 242a included in the insulation component 24a corresponding to the first electrode assembly 22a are integrally formed, the first insulator 241b and the second insulator 242b included in the insulation component 24b corresponding to the second electrode assembly 22b are integrally formed, and the third insulator 243a included in the insulation component 24a corresponding to the first electrode assembly 22a and the third insulator 243b included in the insulation component 24b corresponding to the second electrode assembly 22b are integrally formed, so that when a specific part of insulation fails, only the insulator of this part needs to be replaced, thereby reducing costs.

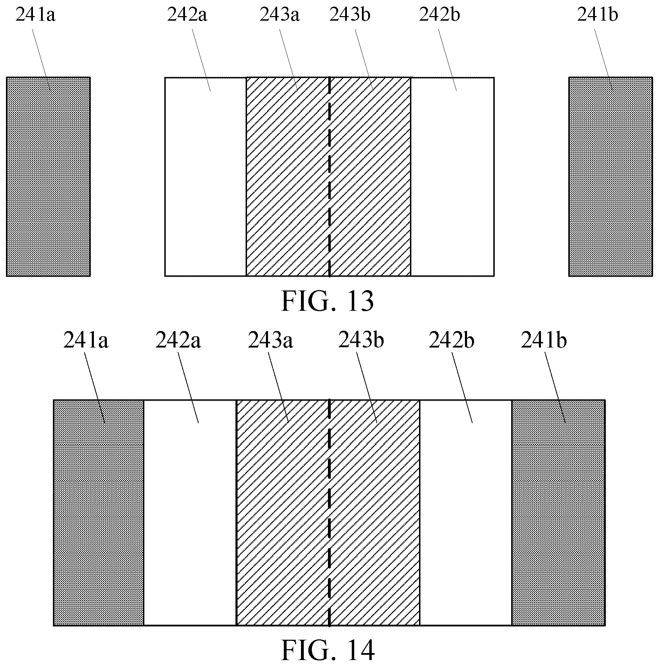

In another embodiment, as shown in FIG. 13, the first insulator 241a included in the insulation component 24a corresponding to the first electrode assembly 22a is individually formed, the second insulator 242a and the third insulator 243a included in the insulation component 24a corresponding to the first electrode assembly 22a, and the second insulator 242b and the third insulator 243b included in the insulation component 24b corresponding to the second electrode assembly 22b are integrally formed, and the first insulator 241b included in the insulation component 24b corresponding to the second electrode assembly 22b is individually formed.

That is, for the first electrode assembly 22a and the second electrode assembly 22b, only three insulation components may be needed.

In this embodiment, the first insulator 241a included in the insulation component 24a corresponding to the first electrode assembly 22a is independently formed, the second insulator 242a and the third insulator 243a included in the insulation component 24a corresponding to the first electrode assembly 22a, and the second insulator 242b and the third insulator 243b included in the insulation component 24b corresponding to the second electrode assembly 22b are integrally formed, and the first insulator 241b included in the insulation component 24b corresponding to the second electrode assembly 22b is individually formed, so that when a specific part of insulation fails, only the insulator of this part needs to be replaced, thereby reducing costs.

In other embodiments, as shown in FIG. 14, the insulation component 24a corresponding to the first electrode assembly 22a and the insulation component 24b corresponding to the second electrode assembly 22b are integrally formed.

In other words, for the first electrode assembly 22a and the second electrode assembly 22b, only one insulation component is needed.

In this embodiment, the insulation component 24a corresponding to the first electrode assembly 22a and the insulation component 24b corresponding to the second electrode assembly 22b are integrally formed, and only one insulation component needs to be covered between two adjacent electrode assemblies, which reduces a quantity of times of splicing and does not need fool-proofing, thereby improving a production capacity.

In a possible implementation, the electrode lead-out portion 201 is welded to the connecting portion 2212, where the connecting region 202 is a welding region.

In this embodiment, the electrode lead-out portion 201 is welded to the connecting portion 2212, so that connection strength between the electrode lead-out portion 201 and the tab 221 can be improved.

As shown in FIG. 3, the electrode lead-out portion 201 may include an electrode terminal 214, where the electrode terminal 214 is welded to the connecting portion 2212. Alternatively, as shown in FIG. 4, the electrode lead-out portion 201 may include an electrode terminal 214 and a connecting component 23, where the connecting portion 2212 is electrically connected to the electrode terminal 214 by the connecting component 23, and the connecting portion 2212 is welded to the connecting component 23.

In this embodiment, the electrode terminal 214 is directly welded to the connecting portion 2212 instead of being connected by a connecting component 23, so that costs can be reduced while improving the space utilization of the cell 20. However, the connecting portion 23 is connected to the electrode terminal 214 by the connecting component 2212, thereby facilitating connection between the tab 221 and the electrode terminal 214.

In some embodiments, as shown in FIG. 5, the electrode lead-out portion 21 may be arranged on a first wall of the cell 20, and the transition portion 2211 may be connected between a first end surface 2221 of the main body 222 and the connecting portion 2212. The first end surface 2221 is arranged opposite to the first wall.

In other words, the transition portion 2211 may be connected to the first end surface 2221 and be bent relative to the first end surface 2221.

Optionally, the first wall may be any wall of the cell 20. For example, the electrode lead-out portion 201 is arranged on the cover plate 212.

In this embodiment, the transition portion 2211 is bent relative to the first end surface 2221 of the main body 222, so that space occupied by the tab 221 can be greatly saved.

Referring to FIG. 3 to FIG. 14 again, an embodiment of this application provides a cell 20, including a first electrode assembly 22a and a second electrode assembly 22b that are adjacent to each other. Each electrode assembly includes a main body 222 and a tab 221, the tab 221 including a transition portion 2211 and a connecting portion 2212, where the transition portion 2211 connects the main body 222 and the connecting portion 2212, and the connecting portion 2212 is connected to an electrode terminal 214 by a connecting component 23 to form a connecting region 202. An insulation component 24a is correspondingly arranged on the first electrode assembly 22a, and an insulation component 24b is correspondingly arranged on the second electrode assembly 22b. Each insulation component 24 includes a first insulator 241, a second insulator 242, and a third insulator 243. The first insulator 241 is fixed to the main body 222, the third insulator 243 is fixed to the connecting portion 2212, the second insulator 242 is connected between the first insulator 241 and the third insulator 243, and a part of the tab 221 from the first joint 203 to the second joint 204 is not fixed to the second insulator 242. The insulation component 24a corresponding to the first electrode assembly 22a and the insulation component 24b corresponding to the second electrode assembly 22b are integrally formed.

In this embodiment, that the transition portion 2311 is not fixed to the insulation component 24 is conducive to resolving the problem of tearing of the tab 221 caused by a bonding force between the insulation component 24 and the tab 221 when the tab 221 is unfolded, bent, or moved. In addition, the insulation component 24a corresponding to the first electrode assembly 22 and the insulation component 24b corresponding to the second electrode assembly 22b are integrally formed and manufactured, and only one insulation component needs to be covered between two adjacent electrode assemblies, which reduces a quantity of times of splicing and does not need fool-proofing, thereby improving a production capacity.

An embodiment of this application provides a battery, including a plurality of cells according to the embodiments of this application.

An embodiment of this application further provides an electric device, including the battery according to the foregoing embodiment. The battery is configured to provide electric energy for the electric device.

The electric device may be the vehicle shown in FIG. 1, or may be any device using a battery.

Although this application has been described with reference to some embodiments, various improvements can be made and components can be replaced with equivalents without departing from the scope of this application. In particular, the various technical features mentioned in the various embodiments can be combined in any way provided that there is no structural conflict. This application is not limited to the specific embodiments disclosed in this specification, but includes all technical solutions falling within the scope of the claims.

## Claims

1. A cell, comprising:
an electrode lead-out portion, configured to lead out electric energy of the cell;
an electrode assembly, comprising a main body and a tab, the tab comprising a transition portion and a connecting portion, wherein the transition portion is connected between the connecting portion and the main body, and the connecting portion is connected to the electrode lead-out portion to form a connecting region; and
an insulation component, wherein the insulation component comprises a first insulator fixed to the main body and a third insulator fixed to the connecting portion, and the insulation component further comprises a second insulator connected between the first insulator and the third insulator, wherein
a part of the tab from a first joint to a second joint is not fixed to the insulation component, the first joint is a joint between the main body and the tab, and the second joint is an edge of the connecting region closest to the transition portion.

2. The cell according to claim 1, wherein the part of the tab from the first joint to the second joint is not fixed to the second insulator.

3. The cell according to claim 1 or 2, wherein the first insulator comprises a first insulation layer and a first adhesive coating, and the third insulator comprises a third insulation layer and a third adhesive coating, wherein the first insulation layer is bonded to the main body through the first adhesive coating, and the third insulation layer is bonded to the connecting portion through the third adhesive coating; and
the second insulator comprises a second insulation layer, wherein a surface of the second insulation layer facing the tab is exposed.

4. The cell according to claim 1 or 2, wherein the first insulator comprises a first insulation layer and a first adhesive coating, the second insulator comprises a second insulation layer and a second adhesive coating, and the third insulator comprises a third insulation layer and a third adhesive coating; and
the second insulator further comprises a fourth insulation layer, wherein the fourth insulation layer is bonded to the second insulation layer through the second adhesive coating, and a surface of the fourth insulation layer facing the tab is exposed.

5. The cell according to any one of claims 1 to 4, wherein a dimension of the first insulator is the same as a dimension of the third insulator along an unfolding direction of the insulation component.

6. The cell according to any one of claims 1 to 4, wherein a dimension of the first insulator is different from a dimension of the third insulator along an unfolding direction of the insulation component.

7. The cell according to claim 6, wherein the dimension of the first insulator is greater than the dimension of the third insulator along the unfolding direction of the insulation component.

8. The cell according to any one of claims 1 to 7, wherein a color of the first insulator is different from a color of the third insulator.

9. The cell according to claim 3 or 4, wherein a color of the first adhesive coating is different from a color of the third adhesive coating.

10. The cell according to any one of claims 3, 4, and 9, wherein the first adhesive coating is spaced apart from the first joint, and/or the third adhesive coating is spaced apart from the second joint.

11. The cell according to any one of claims 1 to 10, wherein the first insulator, the second insulator, and the third insulator are integrally formed.

12. The cell according to any one of claims 1 to 10, wherein at least one of the first insulator, the second insulator, and the third insulator is formed individually.

13. The cell according to any one of claims 1 to 10, wherein the cell comprises a first electrode assembly and a second electrode assembly that are adjacent to each other, wherein the insulation component corresponding to the first electrode assembly and the insulation component corresponding to the second electrode assembly are individually integrally formed.

14. The cell according to any one of claims 1 to 10, wherein the cell comprises a first electrode assembly and a second electrode assembly that are adjacent to each other, wherein the third insulator corresponding to the first electrode assembly and the third insulator corresponding to the second electrode assembly are integrally formed.

15. The cell according to claim 14, wherein the first insulator and the second insulator that correspond to the first electrode assembly are integrally formed, and the first insulator and the second insulator that correspond to the second electrode assembly are integrally formed.

16. The cell according to claim 14, wherein the first insulator corresponding to the first electrode assembly is individually formed, the first insulator corresponding to the second electrode assembly is individually formed, and the second insulator and the third insulator that correspond to the first electrode assembly are integrally formed with the second insulator and the third insulator that correspond to the second electrode assembly.

17. The cell according to claim 14, wherein the insulation component corresponding to the first electrode assembly and the insulation component corresponding to the second electrode assembly are integrally formed.

18. The cell according to any one of claims 1 to 17, wherein the electrode lead-out portion is welded to the connecting portion, wherein the connecting region is a weld mark region.

19. The cell according to claim 18, wherein the electrode lead-out portion comprises an electrode terminal, wherein the electrode terminal is welded to the connecting portion; or
the electrode lead-out portion comprises an electrode terminal and a connecting component, wherein the connecting portion is electrically connected to the electrode terminal by the connecting component, and the connecting portion is welded to the connecting component.

20. The cell according to any one of claims 1 to 19, wherein the electrode lead-out portion is arranged on a first wall of the cell, the transition portion is connected between a first end surface of the main body and the connecting portion, and the first end surface is arranged opposite to the first wall.

21. A battery, comprising the cell according to any one of claims 1 to 20.

22. An electric device, comprising the battery according to claim 21, wherein the battery is configured to supply electric energy to the electric device.
